# EUROPEAN PATENT SPECIFICATION

(11) **EP 3 741 676 B1**
(45) Date of publication and mention of the grant of the patent: **08.12.2021**
(21) Application number: 20175242.5
(22) Date of filing: 18.05.2020
(51) Int. Cl.: B64D 11/04, B64D 11/00, B64D 11/06

(54) **MULTIMODE TRANSFORMABLE MONUMENT**
MULTIMODAL UMWANDELBARES ANORDNUNG
MONUMENT TRANSFORMABLE MULTIMODES

(30) Priority: 23.05.2019 US 201916421207
(43) Date of publication of application: 25.11.2020
(73) Proprietor: Rockwell Collins, Inc., Cedar Rapids, IA 52498 (US)
(72) Inventor: VANINETTI, Travis J., Bothell, WA 98011 (US); MCKEE, Jeffrey M., Duvall, WA 98019 (US); CHRISTENSON, Justin C., Everett, WA 98204 (US)
(74) Representative: Dehns

(56) References cited:
- EP-A1- 1 125 520
- EP-A1- 3 156 331
- DE-A1-102005 043 610
- US-A- 4 478 467
- US-A1- 2007 035 919
- US-B1- 6 646 863

## Description

### CROSS-REFERENCE TO RELATED APPLICATIONS

The present application claims priority under 35 U.S.C. § 120 as a continuationin-part of co-pending U.S. Patent Applications Serial No. 15/950,089 filed April 10, 2018, and Serial No. 16/030,586 filed July 9, 2018.

### BACKGROUND

Conventional aircraft monuments are purpose-built and generally inflexible products. The catering capacities and work/storage spaces of such monuments are not adaptable to multiple and diverse needs of cabin crew with respect to passenger catering. However, free space (e.g., space not already dedicated to passenger seating or storage) is extremely limited, especially in economy-class cabins, leaving few options to provide cabin crew with additional workspace. Similarly, from a passenger perspective, luxuryclass aircraft provide entertainment and socialization spaces for their passengers. However, these amenities are rare in economy-class cabins for substantially the same reasons. Both single-aisle and larger twin-aisle aircraft may necessarily require free space immediately adjacent to their exit doors in order to facilitate safe, rapid evacuation of the aircraft under emergency conditions. However, under normal cruising conditions these spaces are left underutilized or unutilized. US 2007/0035919 relates to a modular communication fixture.

### SUMMARY

The present invention provides a multimode transformable monument as defined in claim 1, further embodiments being defined in dependent claims 2-11.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a forward view illustrating a system of multimode transformable monuments in accordance with example embodiments of this disclosure; and
FIG. 2 is a forward view illustrating the system of FIG. 1 in a deployed state;
FIG. 3 is a detailed isometric view illustrating a deployable counter of the system of FIG. 1;
FIG. 4A is an overhead isometric view illustrating a pivoting linkage of the system of FIG. 1;
FIG. 4B is a detailed isometric view illustrating a pivoting linkage of the system of FIG. 4A;
FIG. 5A is a reverse-angle isometric view illustrating the system of FIG. 1;
FIG. 5B is a detailed overhead isometric view illustrating a partition door of the system of FIG. 5A;
FIG. 6A is an underside isometric view illustrating a counter of the system of FIG. 1;
FIG. 6B is a detailed isometric view illustrating the counter of FIG. 6A;
and FIGS. 7A, 7B, and 7C are diagrammatic underside views illustrating the system of FIG. 1 in respectively an undeployed state, a partially deployed state, and a fully deployed state.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

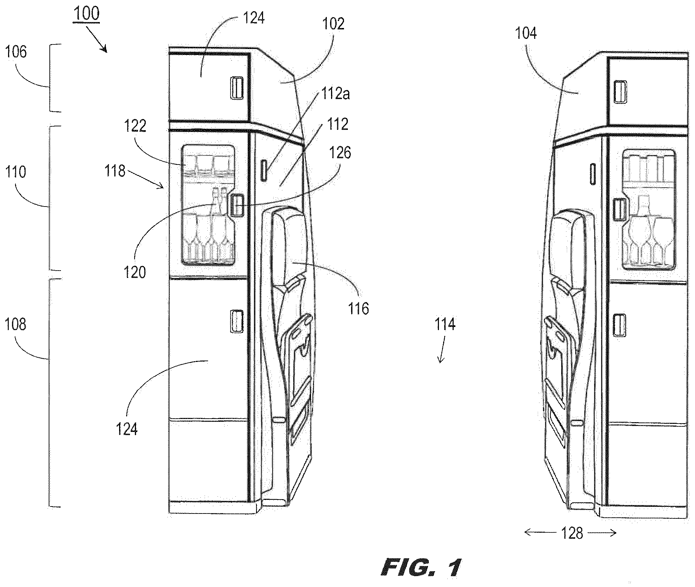

Referring to FIG. 1, a system 100 of multimode transforming monuments 102, 104 is disclosed. The monument 102 may include an upper portion 106, a lower portion 108, a middle portion 110, and a partition door 112 with grasping handle 112a. In embodiments, the monument 104 may include some or all of the same components as the monument 102, and may be mounted in an aircraft passenger cabin opposite the monument 102 adjacent to a cabin space 114. For example, either of the monuments 102, 104 may optionally include a cabin attendant seat 116 (CAS) attached thereto.

In some embodiments, either or both of the monuments 102, 104 may optionally include a self-service compartment 118 capable of storing refreshments 120, glassware 122, utensils, and other food service amenities accessible to passengers, e.g., when the system 100 is deployed at safe cruising altitudes. The upper portion 106 and lower portion 108 may include additional storage compartments (e.g., for emergency equipment or food service/catering amenities) accessible via doors 124. In embodiments, the self-service compartment 118 may be accessible through a partially or fully transparent door 126. In some embodiments, the self-service compartment 118 may be internally lit and/or climate controlled, e.g., via an integrated chiller device capable of maintaining the contents of the compartment at a controlled temperature.

In embodiments, the upper portion 106 may be adjacent to the ceiling of the aircraft, the lower portion 108 adjacent to the floor of the aircraft, and the middle portion 110 between the upper and lower portions. The system 100 may be positioned along a longitudinal aisle 128 of the aircraft (e.g., an aisle extending along the length of the passenger cabin, substantially parallel to a longitudinal or roll axis of the aircraft). For example, the cabin space 114 may be directly adjacent to an exit door of the aircraft. One or both of the CAS 116 may be deployed into the cabin space 114 by a cabin crewmember or flight attendant, e.g., for temporary occupancy during taxi, takeoff, and landing (TTL) flight segments when the monuments 102, 104 are otherwise in an undeployed state.

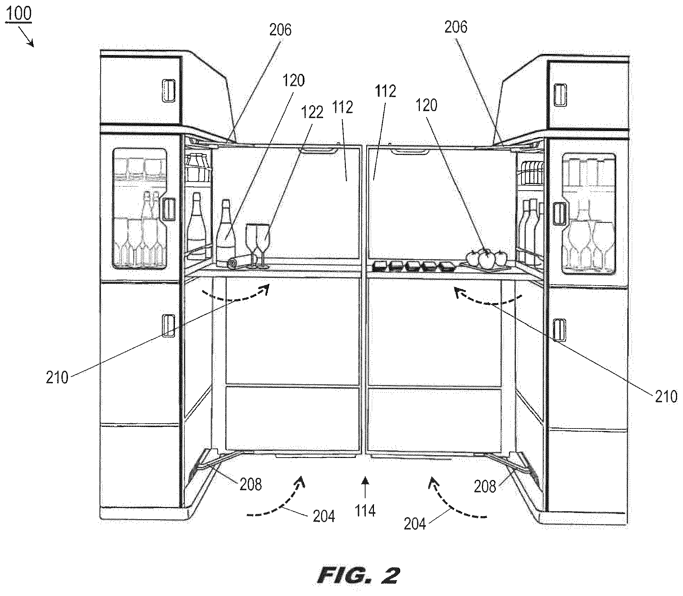

Referring to FIG. 2, the system 100 of multimode transforming monuments 102, 104 is disclosed. The monuments 102, 104 include counters 202; the counters 202 may have a top surface on which refreshments 120, glassware 122, and other amenities may be arranged for inflight catering, passenger socialization, and self-service.

The monuments 102, 104 are deployed (e.g., once the aircraft has reached safe cruising altitude and passengers are permitted to circulate around the cabin) by opening the partition doors 112 of one or both monuments into the cabin space 114. For example, the partition doors 112 may deploy toward each other (204) by pivoting at a substantially 90-degree angle from a closed position into an open position. Each partition door 112 may be connected to its respective monument 102, 104 by pivoting linkages 206, 208 which, when the partition door is deployed, constrain the movement of the partition door along a linear axis substantially parallel to the lateral depth of the monument (e.g., substantially parallel to a lateral axis of the aircraft, when the monuments are deployed to either side of an aircraft exit door). For example, each partition door 112 may be linked to its respective monument 102, 104 by an upper pivoting linkage 206 (linked to the monument at or near the top of the partition door) and a lower pivoting linkage 208 (linked to the monument at or near the bottom of the partition door). The deployed partition doors 112 may form a partition wall across the cabin space 114 (e.g., relative to the longitudinal aisle (128, FIG. 1). The partition doors 112 may remain locked or secured in the deployed state until closed by a cabin crewmember (e.g., when services are terminated).

In embodiments, the counters 202 may be stowed within the monuments 102, 104 and deploy (210) in conjunction with the deployment of the partition doors 112 (e.g. from a stowed position inside the monuments 102, 104 (corresponding to the closed position of the partition doors as shown by FIG. 1) to a fully deployed position as shown by FIG. 2 (corresponding to the open position of the partition doors)). For example, a cabin crewmember may manually open the partition doors 112 via the grasping handles (112a, FIG. 1). As the partition doors deploy (204), the counters 202 pivot and slide (210) into the fully deployed position.

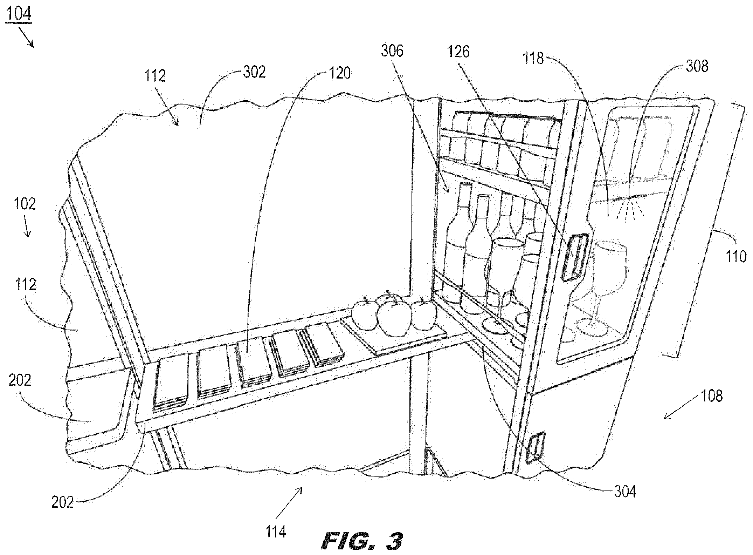

Referring to FIG. 3, the multimode transformable monument 104 is disclosed. When the partition doors 112 of the monument 104 (or the monument 102, FIG. 2) are deployed (204, FIG. 2) into the open position, the counters 202 deploy from their stowed positions within the monuments, pivoting and sliding (210, FIG. 2) into a fully deployed position adjacent to the inside faces 302 of the open partition doors whereupon refreshments 120 may be arranged on the top surface of the counters. For example, the middle portion 110 (which may correspond to the self-service compartment 118) and the lower portion 108 of the monument 104 may be separated by a substantially horizontal counter slot 304 through which the counter 202 may deploy.

The self-service compartment 118 may be accessible to passenger and crew via the compartment door 126. When the partition doors 112 and counters 202 are fully deployed, the deployment of the partition door 112 may additionally open the self-service compartment 118 to access from an adjacent side (306) of the self-service compartment, the adjacent side facing into the cabin space 114 between the two monuments 102, 104. In some embodiments, the self-service compartment 118 may include interior lighting (308) and/or an integrated chiller device for maintaining the contents of the self-service compartment at a controlled temperature.

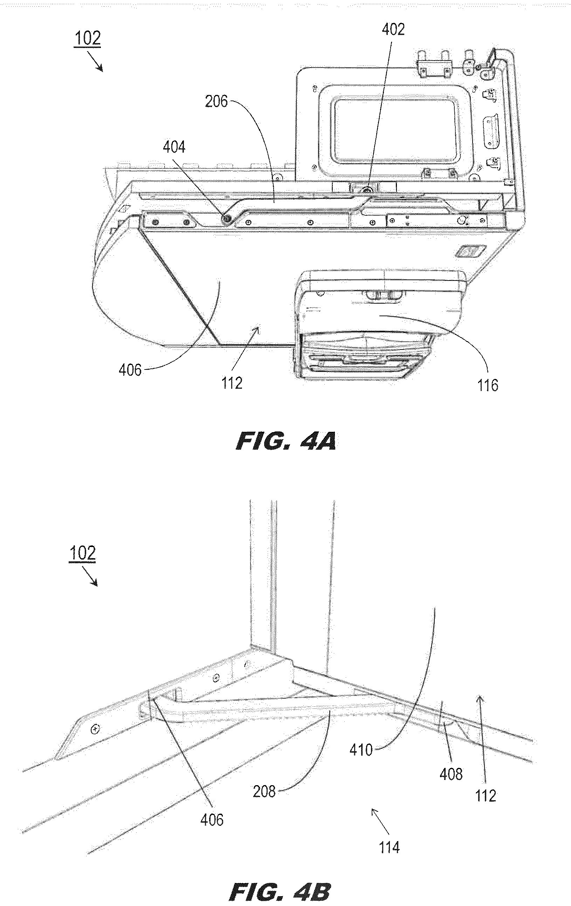

Referring to FIGS. 4A and 4B, the multimode transformable monument 102 is shown. In embodiments, referring in particular to FIG. 4A, when the partition door 112 of the monument 102 is in a closed or undeployed position, the upper pivoting linkage 206 may rest above the partition door, substantially parallel to the outside face 406 of the partition door (e.g., to which the CAS 116 may be attached). For example, the upper pivoting linkage 206 may be pivotably connected to the monument 102 at an inner pivot point 402 and to the partition door 112 at an outer pivot point 404. The lower pivoting linkage 208 may be similarly aligned to the partition door 112 at or near the lower edge of the partition door.

In embodiments, referring in particular to FIG. 4B, when the partition door 112 of the monument 102 is in a fully open and deployed position, the lower pivoting linkage 208 may extend through the cabin space 114, linking the inner pivot point 406 within the monument 102 to the outer pivot point 408 to the inside face 410 of the partition door 112 (e.g., adjacent to which the counters (202, FIG. 2) deploy in conjunction with the opening of the partition door).

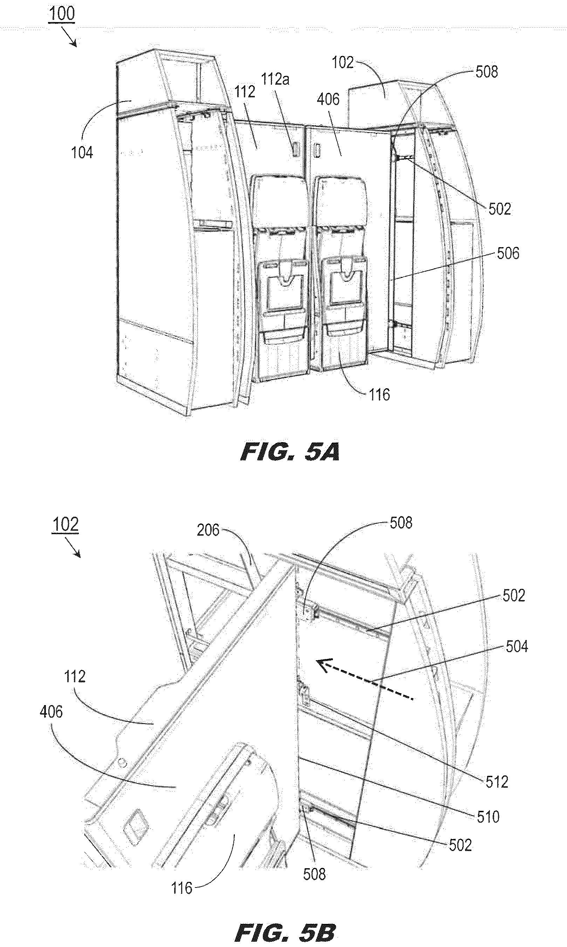

Referring to FIGS. 5A and 5B, the system 100 of multimode transformable monuments 102, 104 is shown in a fully deployed state from a reverse angle. For example, when the partition doors 112 are in a fully open position as shown by FIG. 5A, the outside faces 406 of said partition doors (e.g., to which the CAS 116 may optionally be mounted) may face toward the aircraft wall (e.g., or an exit door, on either side of which the monuments 102, 104 may be mounted) and away from the longitudinal aisle (128, FIG. 1).

In embodiments, the upper pivoting linkage 206 (and the lower pivoting linkage 208, FIG. 4B) may work in conjunction with additional hardware mounted within the monuments 102, 104 to pivot the partition doors 112 to the fully open position shown by FIGS. 5A and 5B (e.g., when the partition doors are opened via the grasping handles 112a). For example, the monuments 102, 104 may incorporate one or more monument rails 502 extending laterally (e.g., substantially orthogonal to the longitudinal aisle (128, FIG. 1) when the system 100 is mounted adjacent to an aircraft exit door) along the monument, defining a linear axis 504 along which the partition doors 112 translate while opening into the cabin space 114. While the partition door 112 pivots outward relative to a continuous hinge 506 (e.g., piano hinge), tracking members 508 mounted to the outside edge 510 of the partition door track forward (504) along the monument rails 502, pivoting the partition door through a substantially 90-degree angle. In some embodiments, stops 512 may be deployed to hold the opened partition doors 112 in their open position.

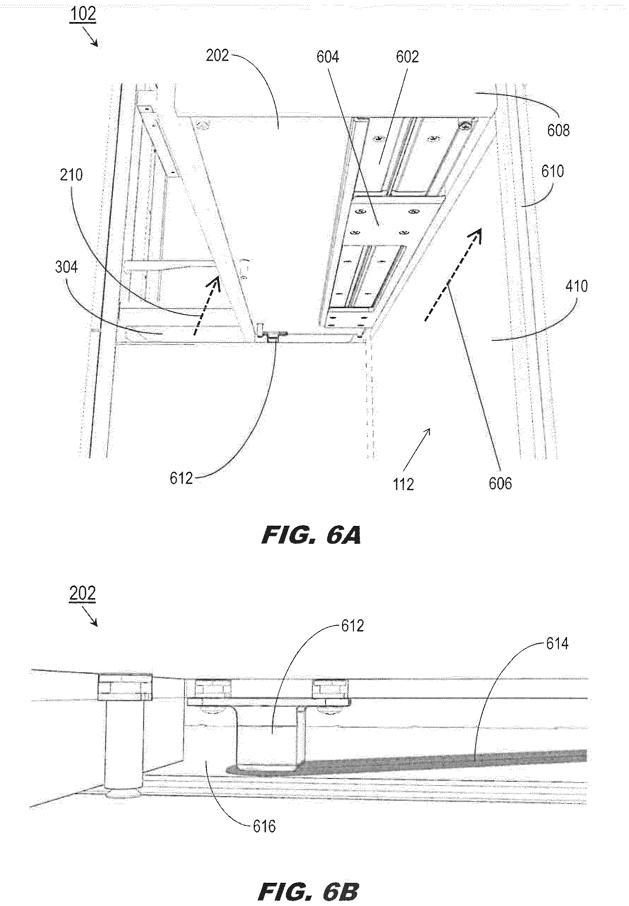

Referring to FIGS. 6A and 6B, the transformable monument 102 and counter 202 are shown. For example, as the partition door 112 deploys from a closed position (as shown by, e.g., FIG. 4A) to an open position (as shown by, e.g., FIGS. 5A-B) the counter 202 similarly deploys from a stowed position within the monument 102 to the deployed position shown by FIG. 6A (e.g., orthogonal to the inside face 410 of the partition door 112), the position of the counter at any point determined by the position of the partition door.

In embodiments, the counter 202 may incorporate a counter rail 602 embedded in, or otherwise attached to, the underside (undersurface) of the counter. Sliders 604 mounted to the partition door 112 may translate along the counter rails 602. For example, the sliders 604 may be mounted to cantilevered structural elements to minimize shear forces, allowing the counter 202 to track laterally (606) across the inside face 410 of the partition door 112 as the partition door opens. When the partition door 112 is in a fully open position, the outside edge 608 of the counter 202 may substantially align with the outside edge 610 of the partition door.

In embodiments, the counter 202 may incorporate a tracking cam 612, e.g., attached to the undersurface of the counter. For example, as the partition door 112 opens, and the counter 202 deploys across the partition door via the sliders 604 and counter rails 602, the tracking cam 612 may translate through a cam track 614 embedded within the monument 102 (e.g., set into a horizontal surface 616 within the monument). For example, the cam track 614 may be curved to control the orientation of the counter 202 as the counter pivots (210) out of the monument 102 through the counter slot 304.

In some embodiments, the sliders 604 and their cantilevered structural elements may be mounted under the counters 202 while the counter rails 602 are mounted to the partition doors 112.

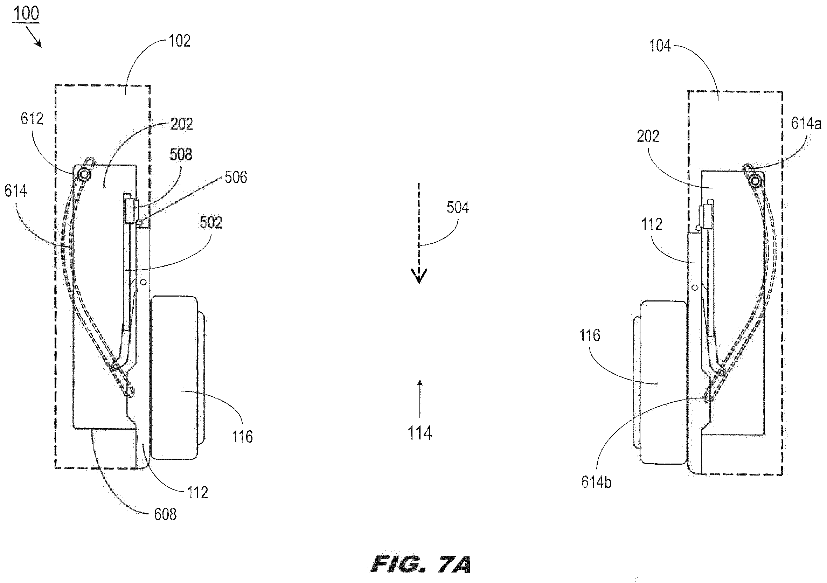

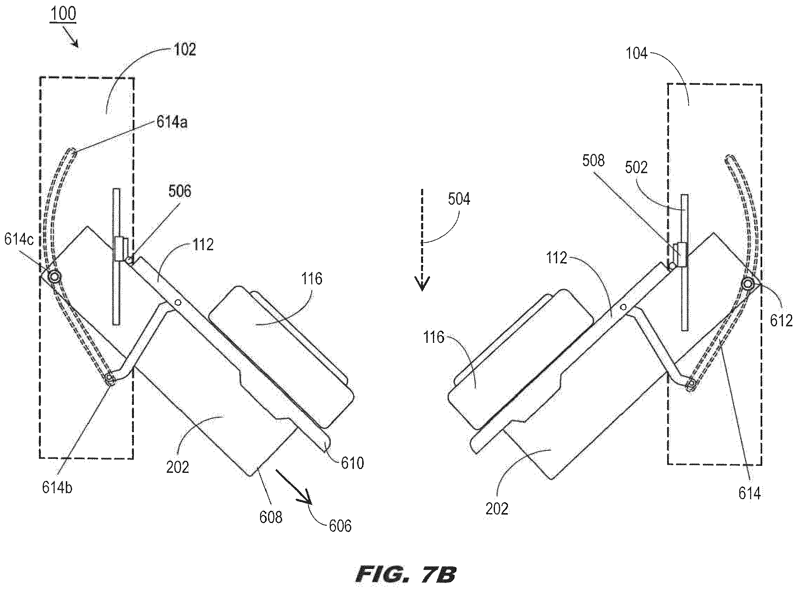

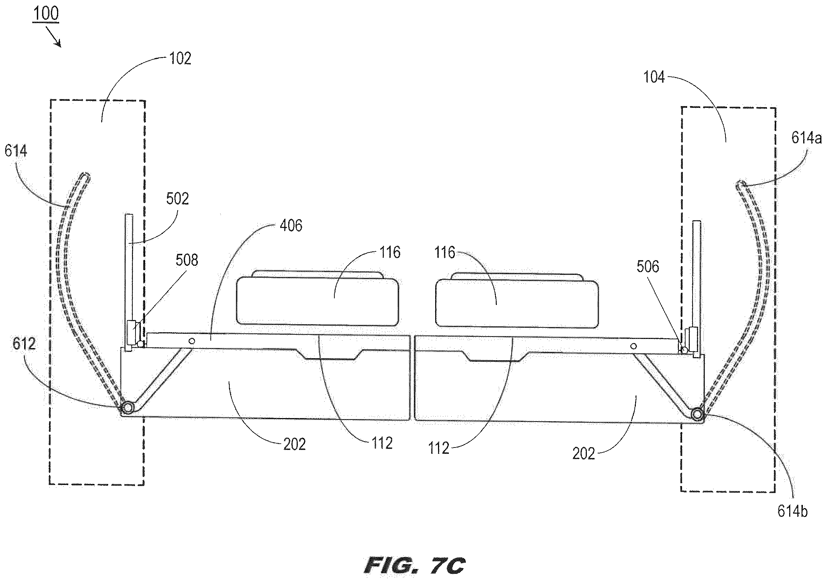

Referring to FIGS. 7A through 7C, the system 100 of multimode transformable monuments 102, 104 is shown. Each of the monuments 102, 104 may incorporate the monument rails 502, tracking members 508, and continuous hinge 506 for deployment of the partition doors 112 as well as the cam tracks 614 therewithin for simultaneous deployment of the counters 202. For example, the partition doors 112 may be deployed (204. FIG. 2) from the closed positions shown by FIG. 7A, to the partially open positions shown by FIG. 7B, to the fully open positions shown by FIG. 7C, the counters 202 tracking (210, FIG. 2) with the partition doors 112 depending on the current position of the partition doors. The partition doors 112 and counters 202 may be locked or otherwise held in their open and deployed positions (as shown by FIG. 4B) until returned to their closed and stowed positions (as shown by FIG. 4A) by cabin crewmembers, e.g., for descent and landing operations.

In embodiments, the cam tracks 402 may extend inside each monument 102, 104 and directly under the counters 202, which are pivotably connected to the cam tracks via the tracking cams 612 mounted to the underside of the counters. For example, the partition doors 112 may be opened, e.g., via the grasping handles (112a, FIG. 1). As the partition doors 112 pivot open into the cabin space 114 relative to the continuous hinges 506, the partition doors track forward (504) as the tracking members 508 translate along the monument rails 502.

Simultaneously, the tracking cams 612 translate along the curved paths of the cam tracks 610 to drive the outside edges 608 of the counters 202 through the counter slots (304, FIG. 6A) and the door-mounted sliders (604, FIG. 6A) along the counter rails (602, FIG. 6A) embedded under the counters 202, such that the outside edges 608 of the counters 202 track laterally (606) toward the outside edges 610 of the partition doors 112. For example, the tracking cams 612 may track between an inside endpoint 614a and an outside endpoint 614b of the cam track 614. A position of the tracking cam 612 at the inside endpoint 614a may correspond to the fully stowed position of the counters 202 and the fully closed position of the partition doors 112 shown by FIG. 7A, while a position of the tracking cam at the outside endpoint 614b may correspond to the fully deployed position of the counters and the fully open position of the partition doors shown by FIG. 7C. The partially deployed position of the counters 202 and the partially open position of the partition doors 112 may correspond to a position 614c of the tracking cam 612 somewhere between the inside and outside endpoints 614a-b, as shown by FIG. 7B.

In embodiments, if a CAS 116 is mounted to the partition door 112 (e.g., to the outside face 406 of the partition door opposite the counter 202), when the partition doors 112 and counters 202 are in their fully open and deployed positions, as shown by FIG. 4C, the partition doors may block access to, and view of, the CAS 116. Similarly, if the system 100 of monuments 102, 104 is deployed adjacent to a cabin space 114 adjacent to an aircraft exit door, the deployed partition doors 112 may block passenger access to the exit door and prevent unauthorized use thereof.

## Claims

1. A multimode transformable monument (102) positionable between a floor and a ceiling of an aircraft cabin and proximate to a cabin space of the aircraft cabin, the monument (102) comprising:
a partition door (112) pivotably (204) deployable by a user relative to a first vertical axis of a hinge (506), between a closed position and an open position within the cabin space;
and **characterized in that** the monument (102) further comprises
a self-deploying counter (202) having a substantially horizontal top surface and an undersurface opposite the top surface, the counter configured to, as the partition door deploys, pivot (210) relative to a second vertical axis of a tracking cam (612) and track laterally (606) relative to the partition door, the counter pivoting between a stowed position and a deployed position corresponding to the open position of the partition door,
wherein the partition door is tracking forward (504) relative to the monument (102) when deployed in the open position.

2. The multimode transformable monument of claim 1, further comprising:
at least one cam track (614) disposed within the structure;
and the tracking cam (612) is attached to the counter, the tracking cam being configured to translate between the first end and a second end of the cam track as the counter pivots.

3. The multimode transformable monument of claim 2, wherein the cam track (614) defines a curved path between the first end and the second end.

4. The multimode transformable monument of any preceding claim, further comprising:
at least one pivoting linkage (206, 208) pivotably coupling the partition door to the monument;
at least one monument rail (502) coupled to the monument and extending substantially parallel to the closed position of the partition door;
at least one tracking member (508) pivotably attached to the partition door, the tracking member configured to translate along the monument rail in accordance with the deployment of the partition door;
and
at least one continuous hinge (506) coupled to the tracking member and to the partition door, the partition door configured to pivot between the closed position and the open position relative to the continuous hinge.

5. The multimode transformable monument of any preceding claim, further comprising:
at least one cabin attendant seat (116) mounted to the partition door opposite the counter, the cabin attendant seat deployable for use by a crewmember when the partition door is in the closed position.

6. The multimode transformable monument of any preceding claim, further comprising:
at least one counter rail (602) extending lengthwise along the undersurface of the counter;
and
at least one slider (604) mounted to the partition door, the slider configured to translate along the counter rail as the partition door deploys.

7. The multimode transformable monument of any of claims 1-5, further comprising:
at least one slider (604) mounted to the undersurface of each counter;
and
at least one counter rail (602) mounted to the partition door and extending lengthwise therealong, the counter configured to translate along the counter rail via the slider as the partition door deploys.

8. The multimode transformable monument of any preceding claim, comprising an upper portion (106) adjacent to the ceiling, a lower portion (108) adjacent to the floor, and a middle portion (110) between the upper and lower portions, one or more of the middle portion and the lower portion comprising the self-deploying counter (202).

9. The multimode transformable monument of claim 8, further comprising:
a self-service compartment (118) disposed within the monument and adjacent to the counter, the self-service compartment comprising:
a first compartment door accessible by the user from a first side;
a second compartment door accessible by the user from a second side adjacent to the first side;
at least one shelf disposed within the self-service compartment;
and
at least one interior light (308) disposed within the self-service compartment and configured to illuminate one or more contents of the self-service compartment;
at least one of the first compartment door and the second compartment door having a substantially transparent surface.

10. The multimode transformable monument of any preceding claim, further comprising:
at least one lighting band disposed on an exterior surface of the monument, the lighting band comprising one or more lighting elements configured to illuminate the cabin space.

11. A multimode transformable monument system (100) comprising a pair of multimode transformable monuments (102, 104) of any preceding claim, positionable on either side of the cabin space.

## Patentansprüche

1. Multimodal umwandelbare Anordnung (102), die zwischen einem Boden und einer Decke einer Flugzeugkabine und in der Nähe eines Kabinenraums der Flugzeugkabine positionierbar ist, wobei die Anordnung (102) Folgendes umfasst:
eine Raumteilertür (112), die schwenkbar (204) relativ zu einer ersten vertikalen Achse eines Scharniers (506) zwischen einer geschlossenen Position und einer offenen Position innerhalb des Kabinenraums durch einen Benutzer entfaltbar ist;
und **dadurch gekennzeichnet, dass** die Anordnung (102) ferner Folgendes umfasst:
einen selbstentfaltenden Tresen (202) mit einer im Wesentlichen horizontalen Oberseite und einer Unterseite gegenüber der Oberseite, wobei der Tresen dazu konfiguriert ist, während des Entfaltens der Raumteilertür relativ zu einer zweiten vertikalen Achse einer Folgenocke (612) zu schwenken (210) und lateral (606) relativ zu der Raumteilertür zu folgen,
wobei der Tresen zwischen einer verstauten Position und einer entfalteten Position, die der offenen Position der Raumteilertür entspricht, schwenkt, wobei die Raumteilertür relativ zu der Anordnung (102) vorwärts folgt (504), wenn sie in der offenen Position entfaltet ist.

2. Multimodal umwandelbare Anordnung nach Anspruch 1, ferner umfassend:
mindestens eine Nockenspur (614), die innerhalb der Struktur angeordnet ist;
und
der Folgenocken (612) ist an dem Tresen befestigt, wobei der Folgenocken dazu konfiguriert ist, zwischen dem ersten Ende und einem zweiten Ende der Nockenspur verlagert zu werden, wenn der Tresen schwenkt.

3. Multimodal umwandelbare Anordnung nach Anspruch 2, wobei die Nockenspur (614) einen gekrümmten Pfad zwischen dem ersten Ende und dem zweiten Ende definiert.

4. Multimodal umwandelbare Anordnung nach einem der vorstehenden Ansprüche, ferner umfassend:
mindestens ein Schwenkgestänge (206, 208), das die Raumteilertür schwenkbar an die Anordnung koppelt;
mindestens eine Anordnungsschiene (502), die an die Anordnung gekoppelt ist und sich im Wesentlichen parallel zu der geschlossenen Position der Raumteilertür erstreckt;
mindestens ein Folgeelement (508), das schwenkbar an der Raumteilertür befestigt ist, wobei das Folgeelement dazu konfiguriert ist, entlang der Anordnungsschiene gemäß dem Entfalten der Raumteilertür verlagert zu werden;
und
mindestens ein durchgängiges Scharnier (506), das an das Folgeelement und an die Raumteilertür gekoppelt ist, wobei die Raumteilertür dazu konfiguriert ist, relativ zu dem durchgängigen Scharnier zwischen der geschlossenen Position und der offenen Position zu schwenken.

5. Multimodal umwandelbare Anordnung nach einem der vorstehenden Ansprüche, ferner umfassend:
mindestens einen Flugbegleitersitz (116), der an der Raumteilertür gegenüber dem Tresen montiert ist, wobei der Flugbegleitersitz für einen Gebrauch durch ein Crew-Mitglied entfaltbar ist, wenn sich die Raumteilertür in der geschlossenen Position befindet.

6. Multimodal umwandelbare Anordnung nach einem der vorstehenden Ansprüche, ferner umfassend:
mindestens eine Tresenschiene (602), die sich in Längsrichtung entlang der Unterseite des Tresens erstreckt;
und
mindestens einen Gleiter (604), der an der Raumteilertür montiert ist, wobei der Gleiter dazu konfiguriert ist, entlang der Tresenschiene verlagert zu werden, wenn sich die Raumteilertür entfaltet.

7. Multimodal umwandelbare Anordnung nach einem der Ansprüche 1-5, ferner umfassend:
mindestens einen Gleiter (604), der an der Unterseite jedes Tresens montiert ist;
und
mindestens eine Tresenschiene (602), die an der Raumteilertür montiert ist und sich in Längsrichtung an dieser entlang erstreckt, wobei der Tresen dazu konfiguriert ist, entlang der Tresenschiene über den Gleiter verlagert zu werden, wenn sich die Raumteilertür entfaltet.

8. Multimodal umwandelbare Anordnung nach einem der vorstehenden Ansprüche, umfassend einen oberen Abschnitt (106) angrenzend an die Decke, einen unteren Abschnitt (108) angrenzend an den Boden und einen mittleren Abschnitt (110) zwischen dem oberen und unteren Abschnitt, wobei einer oder mehrere von dem mittleren Abschnitt und dem unteren Abschnitt den selbstentfaltenden Tresen (202) umfasst/umfassen.

9. Multimodal umwandelbare Anordnung nach Anspruch 8, ferner umfassend:
ein Selbstbedienungsfach (118), das innerhalb der Anordnung und angrenzend an den Tresen angeordnet ist, wobei das Selbstbedienungsfach Folgendes umfasst:
eine erste Fachtür, die für den Benutzer von einer ersten Seite zugänglich ist;
eine zweite Fachtür, die für den Benutzer von einer zweiten Seite angrenzend an die erste Seite zugänglich ist;
mindestens eine Ablage, die innerhalb des Selbstbedienungsfachs angeordnet ist;
und
mindestens ein Innenlicht (308), das innerhalb des Selbstbedienungsfachs angeordnet und dazu konfiguriert ist, einen oder mehrere Inhalte des Selbstbedienungsfachs zu beleuchten;
wobei mindestens eine von der ersten Fachtür und der zweiten Fachtür eine im Wesentlichen durchsichtige Fläche aufweist.

10. Multimodal umwandelbare Anordnung nach einem der vorstehenden Ansprüche, ferner umfassend:
mindestens ein Leuchtband, das an einer Außenfläche der Anordnung angeordnet ist, wobei das Leuchtband ein oder mehrere Lichtelemente umfasst, die dazu konfiguriert sind, den Kabinenraum zu beleuchten.

11. Multimodal umwandelbares Anordnungssystem (100), umfassend ein Paar von multimodal umwandelbaren Anordnungen (102, 104) nach einem der vorstehenden Ansprüche, die an jeder Seite des Kabinenraums positionierbar sind.

## Revendications

1. Monument transformable multimodes (102) positionnable entre un sol et un plafond d'une cabine d'aéronef et à proximité d'un espace de cabine de la cabine d'aéronef, le monument (102) comprenant :
une porte de séparation (112) déployable de manière pivotante (204) par un utilisateur par rapport à un premier axe vertical d'une charnière (506), entre une position fermée et une position ouverte à l'intérieur de l'espace de cabine ;
et **caractérisé en ce que** le monument (102) comprend en outre un comptoir auto-déployable (202) ayant une surface supérieure sensiblement horizontale et une surface inférieure opposée à la surface supérieure, le comptoir étant configuré pour, lorsque la porte de séparation se déploie, pivoter (210) par rapport à un second axe vertical d'une came de suivi (612) et suivre latéralement (606) par rapport à la porte de séparation, le comptoir pivotant entre une position repliée et une position déployée correspondant à la position ouverte de la porte de séparation,
dans lequel la porte de séparation avance (504) par rapport au monument (102) lorsqu'elle est déployée dans la position ouverte.

2. Monument transformable multimodes selon la revendication 1, comprenant en outre :
au moins une piste de came (614) disposée à l'intérieur de la structure ; et
la came de suivi (612) est fixée au comptoir, la came de suivi étant configurée pour se déplacer entre la première extrémité et une seconde extrémité de la piste de came lorsque le comptoir pivote.

3. Monument transformable multimodes selon la revendication 2, dans lequel la piste de came (614) définit un chemin incurvé entre la première extrémité et la seconde extrémité.

4. Monument transformable multimodes selon une quelconque revendication précédente, comprenant en outre :
au moins une liaison pivotante (206, 208) couplant de manière pivotante la porte de séparation au monument ;
au moins un rail de monument (502) couplé au monument et s'étendant sensiblement parallèlement à la position fermée de la porte de séparation ;
au moins un élément de suivi (508) fixé de manière pivotante à la porte de séparation, l'élément de suivi étant configuré pour se déplacer le long du rail de monument en fonction du déploiement de la porte de séparation ;
et
au moins une charnière continue (506) couplée à l'élément de suivi et à la porte de séparation, la porte de séparation étant configurée pour pivoter entre la position fermée et la position ouverte par rapport à la charnière continue.

5. Monument transformable multimodes selon une quelconque revendication précédente, comprenant en outre :
au moins un siège de personnel de cabine (116) monté sur la porte de séparation à l'opposé du comptoir, le siège de personnel de cabine pouvant être déployé pour être utilisé par un membre d'équipage lorsque la porte de séparation est en position fermée.

6. Monument transformable multimodes selon une quelconque revendication précédente, comprenant en outre :
au moins un rail de comptoir (602) s'étendant dans le sens de la longueur le long de la surface inférieure du comptoir ;
et
au moins une glissière (604) montée sur la porte de séparation, la glissière étant configurée pour se déplacer le long du rail de comptoir lorsque la porte de séparation se déploie.

7. Monument transformable multimodes selon l'une quelconque des revendications 1 à 5, comprenant en outre :
au moins une glissière (604) montée sur la surface inférieure de chaque comptoir ;
et
au moins un rail de comptoir (602) monté sur la porte de séparation et s'étendant le long de celle-ci, le comptoir étant configuré pour se déplacer le long du rail de comptoir via la glissière lorsque la porte de séparation se déploie.

8. Monument transformable multimodes selon une quelconque revendication précédente, comprenant une partie supérieure (106) adjacente au plafond, une partie inférieure (108) adjacente au sol, et une partie médiane (110) entre les parties supérieure et inférieure, une ou plusieurs de la partie médiane et de la partie inférieure comprenant le comptoir à déploiement automatique (202).

9. Monument transformable multimodes selon la revendication 8, comprenant en outre :
un compartiment libre-service (118) disposé à l'intérieur du monument et adjacent au comptoir, le compartiment libre-service comprenant :
une première porte de compartiment accessible par l'utilisateur depuis un premier côté ;
une seconde porte de compartiment accessible par l'utilisateur depuis un second côté adjacent au premier côté ;
au moins une étagère disposée à l'intérieur du compartiment libre-service ;
et
au moins une lumière intérieure (308) disposée à l'intérieur du compartiment libre-service et configurée pour éclairer un ou plusieurs contenus du compartiment libre-service ;
au moins l'une de la première porte de compartiment et de la seconde porte de compartiment ayant une surface sensiblement transparente.

10. Monument transformable multimodes selon une quelconque revendication précédente, comprenant en outre :
au moins une bande d'éclairage disposée sur une surface extérieure du monument, la bande d'éclairage comprenant un ou plusieurs éléments d'éclairage configurés pour éclairer l'espace de cabine.

11. Système de monument transformable multimodes (100) comprenant une paire de monuments transformables multimodes (102, 104) selon une quelconque revendication précédente, pouvant être positionnés de chaque côté de l'espace de cabine.
